# EUROPÄISCHE PATENTSCHRIFT

(11) **EP 0 709 904 B1**
(45) Veröffentlichungstag und Bekanntmachung des Hinweises auf die Patenterteilung: **06.05.1998**
(21) Anmeldenummer: 95115455.8
(22) Anmeldetag: 29.09.1995
(51) Int. Cl.: H01M 2/26, H01M 2/28, H01M 4/82

(54) **Verfahren zum Ausbilden metallischer Stromableitfahnen bei Elektrodenplatten von Akkumulatoren**
Manufacturing method of electrode collector lugs for battery plates
Méthode de formation de cosses métalliques collectrices de courant sur des plaques d'accumulateurs

(30) Priorität: 04.10.1994 DE 4435454
(43) Veröffentlichungstag der Anmeldung: 01.05.1996
(73) Patentinhaber: HAGEN BATTERIE AG, D-59494 Soest (DE)
(72) Erfinder: Nann, Eberhard, Dr., D-59494 Soest-Deiringsen (DE); Gürtler, Josef, Dr., D-59505 Bad Sassendorf-Weslarn (DE); Gleuel, Peter, D-34266 Sandershausen-Niessetal (DE)
(74) Vertreter: Manitz, Gerhart, Dr.

(56) Entgegenhaltungen:
- EP-A- 0 538 645
- DE-C- 4 225 708

## Beschreibung

Die Erfindung betrifft ein Verfahren zum Ausbilden metallischer Stromableitfahnen an einer Elektrodenplatte, bei dem zumindest der Bereich, wo die Stromableitfahne ausgebildet sein soll, aus einem Kunststoffnetzwerk besteht. Bevorzugt besteht jedoch die gesamte Elektrodenplatte aus einem Kunststoffnetzwerk, wie es in der DE 39 22 424 C2 beschrieben ist.

Um bei der Herstellung von Akkumulatoren im Großserienmaßstab wirtschaftlich und mit geringer Erhöhung des inneren elektrischen Widerstandes die einzelnen, gleiche Polarität aufweisenden Elektrodenplatten einer oder mehrerer Zellen parallel miteinander verschalten zu können, werden die Stromableitfahnen der parallel und mit Abstand zueinander angeorddneten Elektrodenplatten im allgemeinen in flüssiges Blei oder eine flüssige Bleilegierung getaucht (z.B. nach dem COS-Verfahren), um die Stromleitfahnen der einzelnen gleichpoligen Elektrodenplatten durch eine Blei- oder Bleilegierungsbrücke elektrisch miteinander zu verbinden. Problematisch ist dieses vorbekannte Verfahren zur elektrischen Verbindung der Stromleitfahnen dann, wenn das Grundmaterial aus Kunststoff, insbesondere einem Kunststoffnetzwerk besteht, wie es aus der DE 39 22 424 C2 bekannt ist. Durch eine Erhitzung des Kunststoffes über eine Temperatur von beispielsweise 250°C, was beim Eintauchen in eine Bleischmelze leicht vorkommen kann, schmilzt und zersetzt sich der Kunststoff des Kunststoffnetzwerkes, so daß sich innerhalb der Bleibrücke Hohlräume bilden, in die Säure eintreten kann, wodurch das das Kunststoffnetzwerk überziehende Kupfer korrodiert und auch in den Elektrolyten gelangen kann, wo es die Wasserstoffüberspannung reduziert und damit zum Ausfall der Zelle führt.

Bei einem aus einer beidseitig mit einer Bleilegierung laminierten und dann einem Streckprozeß unterworfenen Kunstharzfolie hergestellten Akkumulator-Katodengitter (JP-A-63-211568) kann zur Korrosionsreduzierung die Stromleitfahne mit Kunstharz, Blei oder einer Bleilegierung überzogen sein. Wie insbesondere das Blei oder die Bleilegierung aufgebracht wird, ist nicht angegeben.

Das Ziel der Erfindung besteht darin, ein Verfahren der eingangs genannten Gattung zu schaffen, mit welchem auch bei Verwendung von Kunststoff als Grundmaterial für die Elektrodenplatten und insbesondere die Stromleitfahne derselben eine stabile, massive und weitgehend metallische Stromleitfahne gebildet werden kann, an die problemlos eine Stromleitbrücke aus Blei oder Bleilegierung angießbar ist, ohne daß eine Gefahr der Zersetzung oder des Schmelzens des Kunststoffes besteht.

Zur Lösung dieser Aufgabe sind die Merkmale des kennzeichnenden Teils des Patentanspruches 1 vorgesehen.

Der Erfindungsgedanke besteht also darin, daß man von beiden Seiten des Kunststoffnetzwerkes her Metalle aus einer bei niedriger Temperatur schmelzenden Legierung unter Einspannung des Kunststoffnetzwerkes unter hohem Druck gegeneinander preßt, wodurch das Metall trotz relativ niedriger Temperatur plastisch in die Zwischenräume des Kunststoffnetzwerkes fließt und dort eine innige Verbindung mit dem Metallüberzug des Kunststoffes und dem von der gegenüberliegenden Seite einfließenden gleichartigen Metall eingeht.

Wesentlich für das erfindungsgemäße Verfahren ist, daß das Ausgangsmaterial insbesondere im Bereich der Stromleitfahne ein engmaschiges Netz aus Kunststoff ist, welches bereits durch insbesondere galvanisches Aufbringen einer elektrisch gut leitenden Metallisierung, insbesondere aus Kupfer leitfähig und durch anschließendes Aufbringen einer Schicht aus einer Blei-Zinn-Legierung und/oder von Blei oder einer Bleilegierung korrosionsstabil ist. Durch das erfindungsgemäße Verfahren werden die aufgepreßten Metallstreifen nicht nur durch die Maschen des Kunststoffnetzwerkes hindurch mit sich selbst, sondern auch mit der bereits auf der Verkupferung des Kunststoffnetzwerkes vorhandenen Blei-Zinn-Legierung und/oder dem Blei oder der Bleilegierung metallisch verbunden. Das Kunststoffnetzwerk sowie die auf es aufgebrachten Metallschichten und Metallstreifen bilden also insbesondere im Bereich der Stromableitfahne einen einheitlichen Verbundkörper.

Vorteilhafte Weiterbildungen des Verfahrens entnimmt man den Ansprüchen 2 bis 7.

Besonders vorteilhaft sind die Ausführungsformen nach den Ansprüchen 8 bis 10, weil hierdurch das überflüssige Metall als recyclebarer Abfall wiedergewonnen wird. Der Stanzprozeß hat außerdem den Vorteil, daß die die KunststoffFahnenbreite minimal überlappenden Metallstreifen an den seitlichen Kanten aufgrund der Scherkräfte noch zusätzlich gegeneinander verpreßt werden. Es ist auch möglich, die auf die Stromleitfahnenbereiche des Kunststoffnetzwerkes aufgebrachten Metallstreifen von vornherein so zuzuschneiden, daß sie exakt auf die Stromleitfahnenbereiche passen und vorzugsweise allseitig geringfügig überstehen, um das Kunststoffnetzwerk allseitig vollständig abzudecken.

Durch das erfindungsgemäße Verfahren werden metallische Elektroden-Stromleitfahnen mit sehr engen Toleranzen hinsichtlich Dicke und Breite erzielt, die das einzuhüllende Kunststoffmaterial vor dem Elektrolytzutritt wirksam schützen, sehr stabil sind und außerdem eine problemlose Verschaltung mit anderen Elektrodenplatten der gleichen oder weiterer Zellen gestattet.

Besonders bevorzugt ist es, wenn der Preßvorgang nach einem der Ansprüche 11 bis 12 kontinuierlich zwischen zwei Walzen durchgeführt wird. Diese Ausführungsform eignet sich für die Großserienproduktion.

Vorteilhafte Weiterbildungen des erfindungsgemäßen Verfahrens sind durch die Ansprüche 13 bis 15 gekennzeichnet.

Wenn nach einem der Ansprüche 16 bis 19 in einem nachfolgenden Verfahrensschritt beidseitig noch weitere Metallstreifen aus deutlich höherschmelzendem Metall bei höheren Temperaturen aufgebracht werden, wird das Kunststoffnetzwerk bereits durch das vorher aufgepreßte niedrigschmelzende Metall geschützt. Die durch die höherschmelzenden Metallbänder eingebrachte erhöhte Wärme wird teilweise für das Anschmelzen der darunterliegenden Schicht aus niedrigschmelzendem Metall aufgezehrt. Daher ist bei dieser Ausführungsform nicht nur das niedrigschmelzende Metall eng mit dem Kunststoff verzahnt, sondern auch das höherschmelzende Metall mit der niedrigschmelzenden Metallschicht.

Auch der COS-Anguß (Stromleitbrücke) von Elektroden mit Kunststofftruktur ist auf diese Weise möglich. Da hier bereits heute die Möglichkeit besteht, durch geschickte Verfahrensführung ein Anschmelzen der Fahnen zu erhalten, das Abschmelzen der Fahnen aber zu verhindern, lassen sich nach obigem Verfahren präparierte Fahnen ebenfalls verwenden.

Um das Verfahren auch wirtschaftlich sinnvoll durchführen zu können, werden bei einer kontinuierlich arbeitenden Anlage zwei dünne Metallbänder oder -streifen bestehend aus leicht verformbarem und niedrigschmelzendem Metall bzw. Metallegierung sandwichartig dem zu verstärkenden Kunststoffnetz-Stromableitfahnenbereich zugeführt. Das sich mit kontinuierlicher Vorschubgeschwindigkeit bewegende Band aus zusammenhängenden Elektrodenplatten bzw. -gittern und die mit derselben Geschwindigkeit transportierten Metallstreifen werden unter einer sich drehenden, beheizten Andrückwalze hindurchgeführt. Dabei kommt es durch den hohen Druck und die erhöhte Temperatur zu einer festen Einbettung des Metalls der Metallstreifen in das netzartige Elektrodenplattenmaterial.

Ein kontinuierliches Verfahren gemäß der Erfindung entnimmt man auch Anspruch 20.

Durch die lokale Erhitzung der aufgebrachten Metallstreifen insbesondere im Bereich ihrer Ränder nach Anspruch 21 wird eine hermetische Abdichtung rundum erzielt, die das Eindringen von Säure wirksam verhindert, gleichwohl aber auch keine Gefahr eines Schmelzens oder Zersetzens des Kunststoffs mit sich bringt, weil durch die nur lokale Erhitzung dafür gesorgt ist, daß die für das kurzzeitige Aufschmelzen erforderliche Wärme sich schnell in die umliegenden, nicht erhitzten Bereiche verteilt.

Als Alternative oder Ergänzung zu dem Einpressen von niedrigschmelzendem Metall von beiden Seiten in das Kunststoffnetzwerk kann eine verstärkte und besonders gut stromleitende Stromableitfahne auch durch die Maßnahmen der Ansprüche 22 bis 30 erzielt werden. Durch die intensivere Verkupferung des Kunststoffnetzwerkes an der Stromleitfahne und in den sie umgebenden Bereichen wird nicht nur ein besserer unmittelbarer Schutz des darunterliegenden Kunststoffnetzwerkes gegen Erhitzung beim Angießen der Bleibrücke erzielt, sondern es wird auch eine schnelle Ableitung der Wärme des angegossenen Bleis in die benachbarten Bereiche der Stromleitfahne erzielt. Die zusätzliche Verkupferung soll bevorzugt vor dem Aufbringen des Blei-Zinn- und/oder Blei- oder Bleilegierungsüberzugs erfolgen. Mit einem Blei- oder Bleilegierungsüberzug von 0,5 bis 1,0 mm könnte auf die zusätzlichen Metallstreifen verzichtet werden. Bei dünneren Blei- oder Bleilegierungsüberzügen sollten zusätzlich noch die Metallstreifen aufgewalzt werden.

Die Ausführungsform nach Anspruch 31 hat den Vorteil, daß bei gleichem Vorschub innerhalb der Preß- und Stanzvorrichtung die doppelte Menge von Elektrodenplatten pro Zeiteinheit hergestellt werden kann. Weiter ist dann, wenn die ausgestanzten Stromleitfahnen in Transportrichtung versetzt und auf dem gleichen Streifen angeordnet sind, der Verschnitt in diesem Bereich herabgesetzt.

Die Verfahrensweise nach Anspruch 32 gewährleistet eine besonders sichere Maschenschließung. Die für das Tauchbad verwendete Zinnlegierung soll eine Schmelztemperatur haben, bei der noch keine Zersetzung des verwendeten Kunststoffnetzwerkes erfolgt, sondern lediglich ein Anschmelzen.

Beansprucht wird weiter eine nach dem erfindungsgemäßen Verfahren hergestellte Akkumulator-Elektrodenplatte gemäß Anspruch 33 oder 34.

Die Erfindung wird im folgenden beispielsweise anhand der Zeichnung beschrieben; in dieser zeigt:
- Fig. 1: eine stark schematisierte Seitenansicht einer Anlage zur Ausführung des erfindungsgemäßen Verfahrens,
- Fig. 2: eine Draufsicht des Gegenstandes der Fig. 1,
- Fig. 3: eine Draufsicht-einer nach dem erfindungsgemäßen Verfahren verarbeiteten Elektrodenplatte aus einem Kunststoffnetzwerk,
- Fig. 4: eine vergrößerte Schnittansicht einer nach dem erfindungsgemäßen Verfahren metallisierten Stromleitfahne,
- Fig. 5: eine Draufsicht einer mit einem Doppelband arbeitenden Ausführungsform des erfindungsgemäßen Verfahrens und
- Fig. 6: eine Abwandlung des anhand von Fig. 5 erläuterten Verfahrens mit Doppelband.

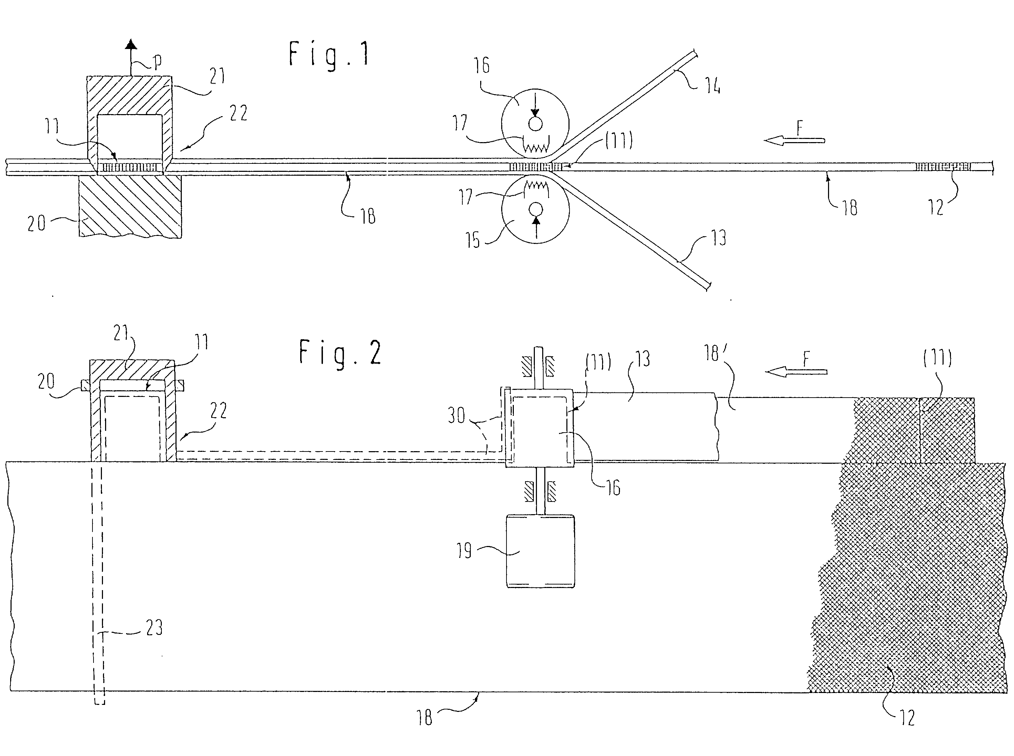

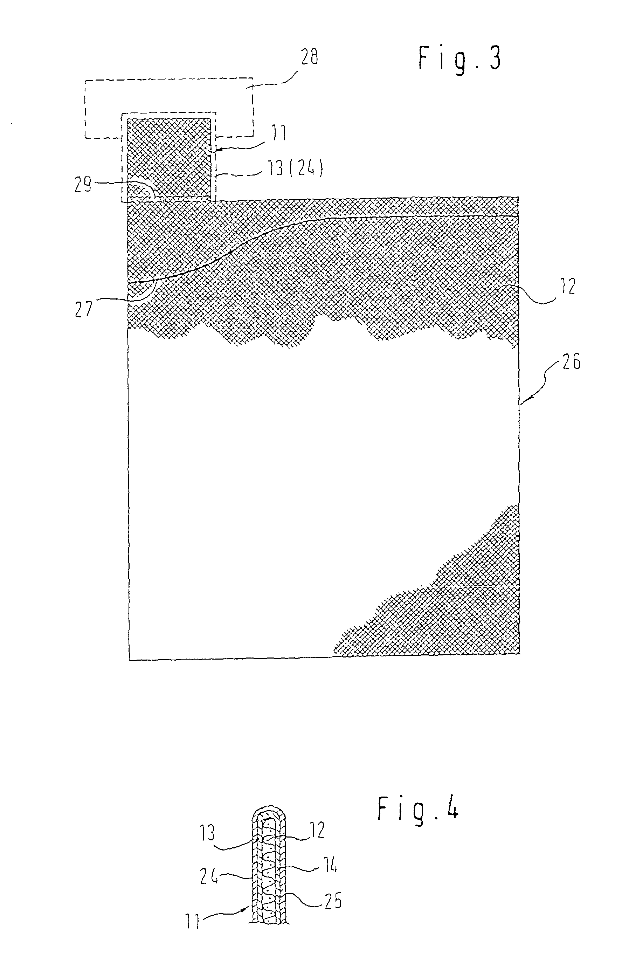

Nach den Fig. 1 und 2 wird ein Band 18 aus einem Kunststoffnetzwerk 12, aus welchem Akkumulator-Elektrodenplatten nach Fig. 3 ausgeschnitten werden, in Richtung des Pfeiles F kontinuierlich mit vorbestimmter Geschwindigkeit gefördert. Am in Fig. 2 oberen Randstreifen 18' des Bandes 18 werden später die Stromleitfahnen 11 ausgebildet. Das Kunststoffnetzwerk 12 ist vorzugsweise gemäß der DE 39 22 424 C2 bereits verkupfert und mit einer Blei-Zinn- und/oder Blei- oder Bleilegierungsschicht versehen. Das aus dem Kunststoffnetzwerk 12 bestehende Band 18 wird zwischen zwei entsprechend angeordneten Druckwalzen 15, 16 hindurchgeführt, und zwar zusammen mit zwei von unten bzw. oben zugeführten, länglichen Metallstreifen 13, 14 aus einem bei niedriger Temperatur schmelzenden Metall, wie z.B. PbSn. Die Metallstreifen 13, 14 und das Kunststoffnetzwerk 12 bilden also zwischen den Walzen 15, 16 eine Sandwichanordnung.

Die Walzen 15, 16 sind mit je einer Heizvorrichtung 17 versehen, die es gestattet, die Walzen 15, 16 auf eine solche Temperatur zu erhitzen, daß die Metallstreifen 13, 14 erweichen, der Kunststoff des Bandes 18 aber nicht geschädigt wird.

Wie durch die Pfeile an den Wellen der Walzen 15, 16 in Fig.1 angedeutet ist, können die beiden Walzen 15, 16 mit hohem Druck von z.B. 30 bar gegeneinander gepreßt werden.

Nach Fig. 2 kann die obere Walze durch eine Motor-Getriebeanordnung 19 so in Umlauf versetzt werden, daß die aus dem Band 18 und dem Metallstreifen 13, 14 bestehende Sandwichanordnung zwischen den Walzen 15, 16 in Richtung des Pfeiles F hindurchgefördert wird.

In Förderrichtung F hinter dem Walzenpaar 15, 16 befindet sich eine aus einem unterhalb des Bandes 18 angeordneten Tisch 20 und einem Stanzwerkzeug 21 bestehende Stanzanordnung 22, die in Fig.1 während des Stanzvorganges dargestellt ist. Im allgemeinen befindet sich jedoch das Stanzwerkzeug 21 in einer in Richtung des Pfeiles p vom Band 18 abgehobener Position, damit der Vorschub des Bandes 18 in Förderrichtung F nicht durch die Stanzvorrichtung 22 behindert wird. Statt des auf- und niedergehenden Stanzwerkzeuges 21 kann auch eine kontinuierlich arbeitende Stanzwalze vorgesehen sein.

Nach Fig.2 kann die Stanzvorrichtung 22 noch durch Schneidwerkzeuge 23, 30 verlängert sein, welche sich quer über das Band 18 bzw. entlang des Oberrandes der zu bildenden Elektrodenplatten erstreckt und zum Zerschneiden des Bandes 18 in einzelne, jeweils eine Stromableitfahne 11 aufweisende Elektrodenplatten 26 (Fig. 3) dient. Die Schneidwerkzeuge können auch an gegebenenfalls vorgesehenen kontinuierlich arbeitenden Stanz- oder Schneidwalzen vorgesehen werden.

Die Wirkungsweise der beschriebenen Anordnung ist wie folgt:

Wenn der für die Stromleitfahnen 11 vorgesehene Streifen 18' des Bandes 18 an dem gegeneinander gepreßten Walzenpaar 15, 16 zwischen den beiden Metallstreifen 13, 14 eingeklemmt wird, fließt das niedrigschmelzende Metall plastisch in die Hohl- und Zwischenräume des Kunststoffnetzwerkes 12, wobei auch die beiden gegenüberliegenden Metallstreifen 13, 14 sich plastisch miteinander verbinden.

Aus dem Walzenpaar 15, 16 tritt somit ein kompakter Verbundkörper bestehend aus den zusammengepreßten Metallstreifen 13, 14 und dem Kunststoffnetzwerk 12 aus. In ähnlicher Weise können zwei weitere Metallstreifen mittels eines weiteren, in Fig. 1 und 2 nicht dargestellten Walzenpaares auf diese Sandwichanordnung aufgepreßt werden.

Sobald dieser Verbundkörper die Stanzvorrichtung 22 erreicht hat, wird diese entweder sehr schnell oder nach kurzzeitigem Anhalten des Bandes 18 nach unten gegen den Tisch 20 in die aus Fig.1 ersichtliche Stanzposition gebracht, wo das über die Stromleitfahne 11 vorn und hinten vorstehende überflüssige Metall weggestanzt wird. Gleichzeitig oder vorher sollen die nur gestrichelt angedeuteten Schneidwerkzeuge 23, 30 die Elektrodenplatten 26 auf die aus Fig. 3 ersichtliche Form zuschneiden. Die abgetrennten Metallstreifenpaare zwischen zwei aufeinanderfolgenden Stromleitfahnen 11 können recycled, d.h. wieder für die Bildung neuer Metallstreifen 13, 14 herangezogen werden.

Unmittelbar nach dem Ausstanzen wird das Stanzwerkzeug 21 wieder angehoben, so daß der Vorschub des Bandes 18 in Förderrichtung F fortgesetzt werden kann. Bevorzugt werden die Stanz- und Schneidwerkzeuge jedoch durch kontinuierlich laufende Stanz- oder Schneidwalzen realisiert.

Alternativ zu zwei kreiszylindrischen Walzen 15, 16 könnten erfindungsgemäß auch eine oder beide Walzen 15, 16 exzentrisch ausgebildet sein, wobei der Durchmesser der Walzen 15, 16 dann so zu wählen wäre, daß die die größte radiale Ausdehnung aufweisenden Walzenbereiche gerade dann gemeinsam den Walzenspalt bilden, wenn ein Kunststoffnetzwerkbereich, an dem die Stromableitfahne 11 ausgebildet werden soll, sich gerade im Walzenspalt befindet.

Auf diese Weise wird erreicht, daß eine hohe Preßkraft nur dann erzielt wird, wenn sich der Stromleitfahnen-Kunststoffnetzwerkbereich 12 zwischen den Walzen 15, 16 befindet. Während der übrigen Drehpositionen der Walzen 15, 16 wird dann keine Preßkraft auf die Metallstreifen 13, 14 ausgeübt.

Im Anschluß an das Stanzwerkzeug 21 ist vorzugsweise noch eine in den Fig. 1 und 2 nicht dargestellte Löt- oder Schweißstation vorgesehen, in der die umlaufenden Ränder der auf die Stromleitfahne 11 aufgebrachten Metallstreifen lokal erhitzt und durch Löten oder Schweißen so dicht miteinander verbunden werden, daß beim späteren Gebrauch keine Säure von außen in dem von den Metallstreifen abgegrenzten Raum eindringen kann.

Die Erhitzung kann durch Ultraschall oder andere eine Lokalerhitzung ermöglichende Maßnahmen vorgenommen werden.

In Fig. 3 ist angedeutet, wie die mit den nur gestrichelt angedeuteten Metallstreifen 13, 14 bzw. 24, 25 versehene Stromleitfahne 11 (Fig. 4) anschließend mit einer aus Blei bestehenden, gestrichelt angedeuteten Stromleitbrücke 28 umgossen werden kann. Danach befindet sich die Stromleitbrücke 28 nur im oberen Bereich der Stromleitfahne 11, wodurch die beim Angießen entstehende Wärme sich auch auf die darunterliegenden, nicht mit dem geschmolzenen Metall der Stromleitbrücke 28 in Berührung kommenden Bereiche der Metallstreifen 13, 14 bzw. 24, 25 verteilen kann.

Mit 29 ist in Fig. 3 derjenige Bereich am Fuße der Stromleitfahne 11 bezeichnet, entlang dessen durch lokale Erhitzung eine lokale Verlötung oder Verschweißung der auf gegenüberliegenden Seiten der S-tromleitfahne 11 vorgesehenen Metallstreifen 13, 14 bzw. 24, 25 erfolgt. Auch an den freien Rändern der Stromleitfahne 11 soll eine Verlötung oder Verschweißung vorgenommen werden.

Statt Metallstreifen 13, 14 bzw. 24, 25 auf die Stromleitfahne 11 aufzubringen, kann diese auch mit einer oder mit mehreren, z.B. elektrolytisch aufgebrachten Kupferschichten bedeckt sein, welche zusammen so dick sind, daß beim Angießen der Stromleitbrücke 28 kein Schmelzen oder Zersetzen des Kunststoffes im Kunststoffnetzwerk 12 auftritt.

Bei dieser Ausführungsform ist es zweckmäßig, die vorzugsweise vor der Verzinnung und/oder Verbleiung aufgebrachte zusätzliche Verkupferungsschicht bzw. -schichten nicht nur im Bereich der Stromleitfahne 11, sondern auch im oberen Bereich des Plattenteils der Elektrodenplatte 26 etwa bis zu der Grenze 27 in Fig. 3 aufzubringen, wobei ein stetiger Übergang von der zusätzlichen Verkupferung zur Normalverkupferung des größten Teils der Elektrodenplatte 26 bevorzugt ist. Durch diese Maßnahme wird nicht nur eine bessere Verteilung der beim Angießen der Stromleitbrücke 28 entstehenden Wärme, sondern auch ein geringerer Widerstand der Elektrodenplatte 26 im Bereich der Stromleitfahne 11 und der an ihre Mündung angrenzenden Bereiche der Elektrodenplatte 26 gewährleistet, was deswegen wichtig ist, weil die Stromdichte bei der Entladung insbesondere von Starterbatterien in diesen Bereichen am größten ist.

Gegebenenfalls kann auch eine bessere Verkupferung im Bereich der Stromleitfahne 11 und das Anbringen von einen oder mehreren Metallstreifen durch Aufpressen kombiniert werden.

Fig. 4 zeigt eine Stromleitfahne 11 im Querschnitt, welche nach einem diskontinuierlichen Verfahren mit Metallstreifen 13, 14 bzw. 24, 25 versehen ist.

In diesem Fall bestehen die Metallstreifen 13, 14 aus einem Stück und werden um die Oberkante des die Stromleitfahne 11 bildenden Kunststoffnetzwerkes 12 herumgeschlagen und dann von beiden Seiten gegeneinander gepreßt. Auf diese umgekehrt U-förmige Anordnung der Metallstreifen 13, 14 wird dann ein weiterer einheitlicher Metallstreifen herumgeschlagen, welcher auf beiden Flächen Metallstreifen 24, 25 bildet. Auch diese Metallstreifen 24, 25 werden von entgegengesetzten Seiten gegen die darunterliegenden Metallstreifen 13, 14 und das Kunststoffnetzwerk 12 gepreßt. Anschließend wird dann bevorzugt an den zunächst noch offenen seitlichen und unteren Rändern eine Verlötung oder lokale Verschweißung der einzelnen Metallstreifen 13, 14, 24, 25 miteinander vorgenommen.

Der Vorteil des Herumschlagens der als einzelne Bänder ausgebildeten Metallstreifen 13, 14 bwz. 24, 25 über die Oberkante der Stromleitfahne 11 besteht darin, daß gerade im Bereich der Oberkante, wo die Stromleitbrücke 28 (Fig. 3) angegossen wird, ein besonders guter Schutz des Kunststoffnetzwerkes 12 gewährleistet ist.

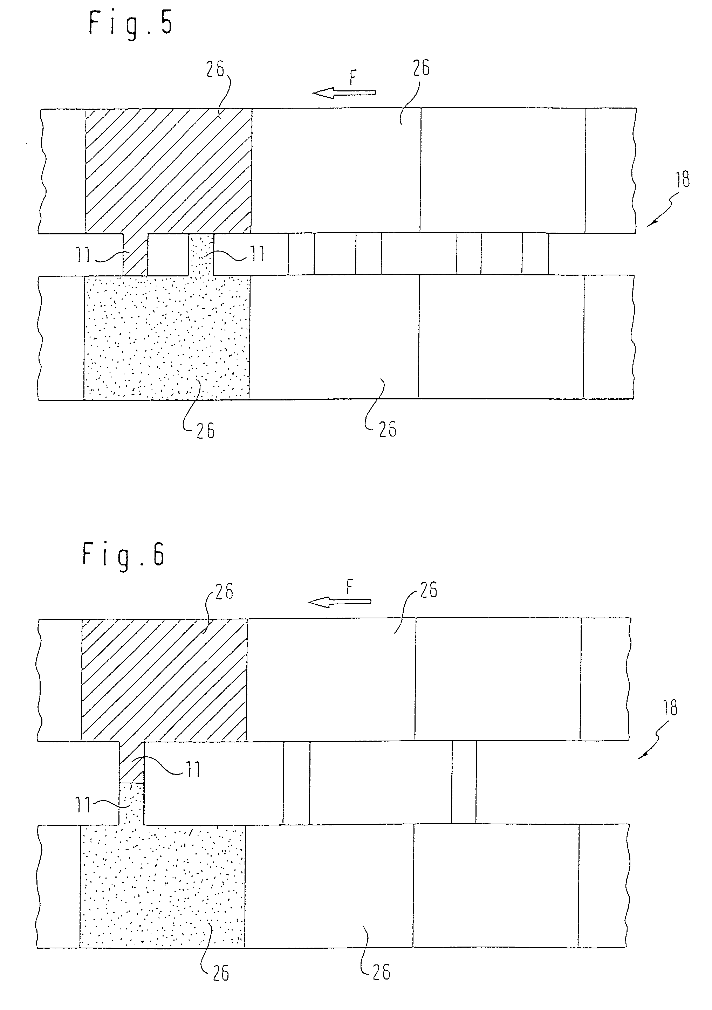

Die Fig. 5 und 6 zeigen Draufsichten auf ein Kunscstoffnetzwerk-Doppelband 18, welches eine solche Breite hat, daß durch einen einzigen Schneid- oder Stanzvorgang jeweils zwei nebeneinanderliegende Elektrodenplatten 26 mit jeweils einer Stromleitfahne 11 gebildet werden können. Beim Ausführungsbeispiel nach Fig. 5 liegen die beiden Stromleitfahnen 11 eines Ausschnittes in Förderrichtung F hintereinander, während sie bei der Ausführungsform des Verfahrens nach Fig.6 in Förderrichtung F gesehen nebeneinanderliegen und beim abschließenden Schneid- oder Stanzvorgang voneinander getrennt werden müssen. Das Aufbringen der Metallstreifen 13, 14 bzw. 24, 25 erfolgt analog Fig. 1, 2.

Die Verfahren nach den Fig. 5 und 6 haben den Vorteil, daß der Ausstoß an fertiggestellten Elektrodenplatten bei gleicher Vorschubgeschwindigkeit verdoppelt und zum anderen der Anteil an Metall- und Kunststoffabfall mehr als halbiert wird im Vergleich zur Verwendung eines Einzelbandes gemäß den Fig. 1 und 2.

Die Maschengröße des Kunststoffnetzwerkes soll im Fahnenbereich 0,5 bis 10 mm² betragen. Die Dicke der Kupferschicht soll im Fahnenbereich 0,01 bis 0,5 mm, im übrigen Plattenbereich 0,1 bis 100 µm betragen. Die darauf abgeschiedene Blei-Zinnschicht soll eine Dicke von 1 bis 20 µm, die darauf aufgebrachte Blei/Bleilegierungschicht eine Dicke von 0,01 bis 1,0 mm haben, wobei die größeren Schichtdicken nur im Fahnenbereich benötigt werden.

Die Dicke der aufgebrachten Metallstreifen 13, 14 sollte bei 3 mm liegen, wodurch eine Gesamtdicke der Stromableitfahne 11 von ca. 6 mm erzielt wird.

### Bezugszeichenliste

- 11: Stromableitfahne
- 12: Kunststoffnetzwerkbereich
- 13: Metallstreifen
- 14: Metallstreifen
- 15: Druckwalze
- 16: Druckwalze
- 17: Heizvorrichtung
- 18: Band
- 19: Motor-Getriebeanordnung
- 20: Tisch
- 21: Stanzwerkzeug
- 22: Stanzvorrichtung
- 23: Schneidwerkzeug
- 24: Metallstreifen
- 25: Metallstreifen
- 26: Elektrodenplatte
- 27: Bereichspumpe
- 28: Stromleitbrücke
- 29: Erhitzungsbereich
- 30: Schneidwerkzeug

## Patentansprüche

1. Verfahren zum Ausbilden metallischer Stromableitfahnen (11) an einer Akkumulator-Elektrodenplatte, bei der zumindest der Bereich, wo die Stromleitfahne (11) ausgebildet sein soll, aus einem Kunststoffnetzwerk besteht, das mit einer elektrisch gut leitenden Metallisierung versehen ist, die wiederum mit einem Zinn- oder Blei-Zinn- und/oder Blei- oder Bleilegierungsüberzug versehen ist,
dadurch gekennzeichnet,
daß an die beiden gegenüberliegenden Oberflächen des Kunststoffnetzwerkes (12) im Bereich der zu bildenden Stromableitfahne (11) Metallstreifen (13, 14) aus einer bei niedriger Temperatur schmelzenden Legierung gebracht sind, welche zumindest den oberen Bereich der zu bildenden Stromableitfahne (11) überdecken, und daß die beiden Metallstreifen (13, 14) von entgegengesetzten Seiten unter Einspannung des Kunststoffnetzwerkes (12) von den flachen Seiten her mit hohem Druck gegeneinander gepreßt werden, derart, daß das Metall der Metallstreifen (13, 14) in das Kunststoffnetzwerk (12) hineinfließt und die beiden Metallstreifen (13, 14) sich zumindest an den Rändern des Kunststoffnetzwerkes (12) miteinander verbinden.

2. Verfahren nach Anspruch 1,
dadurch gekennzeichnet,
daß die elektrisch gut leitende Metallisierung aus Kupfer besteht.

3. Verfahren nach Anspruch 1 oder 2,
dadurch gekennzeichnet,
daß die beiden Metallstreifen (13, 14) von entgegengesetzten Seiten unter Erhitzen auf eine Temperatur, die die Metallstreifen (13, 14) zumindest erweicht, das Kunststoffnetzwerk (12) aber noch nicht schmelzen läßt oder zersetzt, unter Einspannung des Kunststoffnetzwerkes (12) von den flachen Seiten her mit hohem Druck gegeneinander gepreßt werden.

4. Verfahren nach Anspruch 3,
dadurch gekennzeichnet,
daß die Erhitzung auf eine Temperatur erfolgt, die die Metallstreifen (13, 14) zumindest an den Rändern anschmilzt.

5. Verfahren nach einem der vorhergehenden Ansprüche,
dadurch gekennzeichnet,
daß die beiden Metallstreifen (13, 14) sich auch im Innern des Kunststoffnetzwerkes (12) miteinander verbinden.

6. Verfahren nach einem der vorhergehenden Ansprüche,
dadurch gekennzeichnet,
daß die Metallstreifen (13, 14) aus Zinn oder einer Blei-Zinn-Legierung bestehen.

7. Verfahren nach Anspruch 6,
dadurch gekennzeichnet,
daß die Blei-Zinn-Legierung einen Bleianteil von bis zu 50 % aufweist.

8. Verfahren nach Anspruch 1,
dadurch gekennzeichnet,
daß die Metallstreifen (13, 14) an den freien Rändern der Stromableitfahne (11) über das Kunststoffnetzwerk (12) vorstehen und
- entweder nach dem Pressen insbesondere durch einen Stanzvorgang annähernd auf die Größe der Stromableitfahne (11) zugeschnitten werden,
- oder als Einheit um einen Rand der Stromableitfahne (11) herumgeklappt und dann gepreßt und an den freien Rändern zugeschnitten werden, sofern dies noch erforderlich ist.

9. Verfahren nach Anspruch 8,
dadurch gekennzeichnet,
daß die Metallstreifen als Einheit um den oberen Rand der Stromableitfahne (11) herumgeklappt und dann gepreßt und an den freien Rändern zugeschnitten werden, sofern dies noch erforderlich ist.

10. Verfahren nach Anspruch 8 oder 9,
dadurch gekennzeichnet,
daß das Zuschneiden an den freien Rändern durch einen Stanzvorgang erfolgt.

11. Verfahren nach einem der vorangehenden Ansprüche,
dadurch gekennzeichnet,
daß der Preßvorgang zwischen zwei Walzen (15, 16), von denen wenigstens eine geheizt ist und denen zwei Metallstreifen (13, 14) und dazwischen das Kunststoffnetzwerk im Bereich der zu bildenden Stromleitfahnen (11) zugeführt werden, kontinuierlich durchgeführt wird.

12. Verfahren nach Anspruch 11,
dadurch gekennzeichnet,
daß beide Walzen (15, 16) geheizt sind.

13. Verfahren nach einem der vorhergehenden Ansprüche,
dadurch gekennzeichnet,
daß der Preßvorgang bei einer Temperatur zwischen 100 und 120°C durchgeführt wird und/oder daß der Druck beim Preßvorgang größer als 20 bar ist.

14. Verfahren nach Anspruch 13,
dadurch gekennzeichnet,
daß der Druck beim Preßvorgang 25 bis 35 bar beträgt.

15. Verfahren nach Anspruch 14,
dadurch gekennzeichnet,
daß der Druck beim Preßvorgang etwa 30 bar beträgt.

16. Verfahren nach einem der vorhergehenden Ansprüche,
dadurch gekennzeichnet,
daß auf die so hergestellte Stromableitfahne (11) von beiden Flachseiten her zwei weitere Metallstreifen (24, 25) mit deutlich höherem Schmelzpunkt aufgebracht werden, welche durch Wärmezufuhr und Anschmelzen der darunterliegenden Metallstreifen (13, 14) aus der bei niedriger Temperatur schmelzenden Legierung und Andrücken mit letzterer verbunden werden.

17. Verfahren nach Anspruch 16,
dadurch gekennzeichnet,
daß die weiteren Metallstreifen (24, 25) aus Blei oder einer Bleilegierung bestehen.

18. Verfahren nach Anspruch 17,
dadurch gekennzeichnet,
daß die Bleilegierung bis zu 3 % Zinn enthält.

19. Verfahren nach einem der Ansprüche 16 bis 18,
dadurch gekennzeichnet,
daß die weiteren Metallstreifen (24, 25) nach dem Aufbringen auf das Kunststoffnetzwerk (12) an den Rändern noch verlötet oder verschweißt werden.

20. Verfahren nach einem der vorhergehenden Ansprüche,
dadurch gekennzeichnet,
daß die Stromableitfahnen (11) an einem kontinuierlich vorgeschobenen Band (18) aus zusammenhängenden Kunststoffnetzwerkplatten ausgebildet werden und das Wegstanzen überflüssiger Bereiche der Metallstreifen (13, 14) zusammen mit dem Zerschneiden des Bandes (18) in einzelne Elektrodenplatten (26) erfolgt.

21. Verfahren nach einem der vorhergehenden Ansprüche,
dadurch gekennzeichnet,
daß die aufgebrachten Metallstreifen (13, 14; 24, 25) nach oder bei dem Aufpressen zusätzlich lokal bis zum Zusammenschmelzen erhitzt werden, wobei die Erhitzungsbereiche so begrenzt werden, daß nach dem Zusammenschmelzen die entstehende Wärme ausreichend schnell auf die übrigen Bereiche der Metallstreifen verteilt wird, um ein Schmelzen oder Zersetzen des Kunststoffes zu vermeiden, wobei bevorzugt die lokale Erhitzung durch Ultraschall, elektrische Induktion, Wirbelstrom oder Mikrowellen erfolgt und/oder die lokale Erhitzung entlang des Randes der Metallstreifen (13, 14; 24, 25) und/oder am Fuß der Stromleitfahne (11) erfolgt.

22. Verfahren zum Ausbilden metallischer Stromableitfahnen (11) an einer Elektrodenplatte, bei der zumindest der Bereich, wo die Stromableitfahne ausgebildet sein soll, aus einem Kunststoffnetzwerk besteht, das mit einer leitenden Metallisierung versehen ist, die wiederum mit einem Zinn oder Blei-Zinn- und/oder Blei- oder Bleilegierungsüberzug versehen ist,
dadurch gekennzeichnet,
daß das Kunststoffnetzwerk (12) zur Bildung einer dicken Metallschicht einmal oder mehrfach metallisiert und anschließend verzinnt und verbleit wird.

23. Verfahren zum Ausbilden metallischer Stromableitfahnen (11) an einer Elektrodenplatte, bei der zumindest der Bereich, wo die Stromableitfahne ausgebildet sein soll, aus einem Kunststoffnetzwerk besteht, das mit einer leitenden Metallisierung versehen ist, nach einem der vorhergehenden Ansprüche,
dadurch gekennzeichnet,
daß das Kunststoffnetzwerk (12) zur Bildung einer dicken Metallschicht einmal oder mehrfach metallisiert und anschließend verzinnt und verbleit wird.

24. Verfahren nach Anspruch 22 oder 23,
dadurch gekennzeichnet,
daß die Metallisierung aus Kupfer besteht.

25. Verfahren nach einem der Ansprüche 22 bis 23,
dadurch gekennzeichnet,
daß außer der Stromleitfahne (11) selbst auch noch ein Bereich um die Mündung der Stromleitfahne (11) in den Plattenteil dicker bzw. mehrfach verkupfert und anschließend verzinnt oder verbleit wird.

26. Verfahren nach einem der vorhergehenden Ansprüche,
dadurch gekennzeichnet,
daß das Kunststoffnetzwerk (12) im Bereich der zu bildenden Stromableitfahnen (11) engermaschig als in den übrigen Bereichen der Elektrodenplatten ausgebildet ist.

27. Verfahren nach Anspruch 26,
dadurch gekennzeichnet,
daß das Kunststoffnetzwerk (12) auch noch im Bereich um die Mündung der Stromleitfahne (12) in den Plattenteil engermaschig als in den übrigen Bereichen der Elektrodenplatten ausgebildet ist.

28. Verfahren nach Anspruch 26 oder 27,
dadurch gekennzeichnet,
daß die Maschengröße im Bereich der Stromleitfahnen (12) 0,5 bis 10 mm² und in den übrigen Bereichen der Elektrodenplatten 5 bis 50 mm² beträgt.

29. Verfahren nach einem der vorhergehenden Ansprüche,
dadurch gekennzeichnet,
daß eine Stromleitbrücke (28) nur um den oberen Bereich der Stromleitfahne (11) herumgegossen wird.

30. Verfahren nach Anspruch 29,
dadurch gekennzeichnet,
daß die Stromleitbrücke (28) aus Blei oder Bleilegierung besteht.

31. Verfahren nach einem der vorhergehenden Ansprüche,
dadurch gekennzeichnet,
daß aus einem einzigen breiten Band (28) nebeneinander jeweils zwei Elektrodenplatten (26) mit auf der gleichen Innenseite liegenden Stromleitfahnen (11) ausgeschnitten bzw. ausgestanzt werden.

32. Verfahren nach einem der vorhergehenden Asnprüche,
dadurch gekennzeichnet,
daß vor dem Aufbringen der Metallstreifen (13, 14) die offenen Maschen des bereits metallisierten sowie mit einem Zinn- oder Blei-Zinn- und/oder Blei- oder Bleilegierungsüberzug versehene Kunststoffnetzwerkes durch einen Tauchprozeß in einem Zinn- oder Blei-Zinn-Bad metallisch ausgefüllt werden.

33. Akkumulator-Elektrodenplatte (26), bei der zumindest der Bereich, wo die Stromleitfahne (11) ausgebildet ist, aus einem Kunststoffnetzwerk besteht, das mit einer leitenden Metallisierung versehen ist, hergestellt nach dem Verfahren gemäß einem der vorangehenden Ansprüche,
dadurch gekennzeichnet,
daß im Bereich der Stromleitfahne (11) zusätzlich Metallschichten aus Zinn, Blei-Zinn-Legierungen, Blei und/oder Kupfer so schonend aufgebracht sind, daß das Kunststoffnetzwerk nicht beeinträchtigt ist.

34. Akkumulator-Elektrodenplatte (26) nach Anspruch 33,
dadurch gekennzeichnet,
daß die Metallisierung aus Kupfer besteht.

## Claims

1. Method of forming metallic current conducting lugs (11) on an accumulator electrode plate wherein at least the region where the current conducing lug (11) has to be formed consists of a plastic net structure which is preferably provided with a metallisation which conducts electricity well, which is in turn provided with a tin or lead/tin coating and/or a lead coating or a lead alloy coating, characterized in that metal strips (13, 14) of an alloy which melts at low temperature are applied to the two oppositely disposed surfaces of the plastic net structure (12) in the region of the current conducting lug which is to be formed, with the strips covering over at least the upper region of the current conducting lug (11) which is to be formed; and in that the two metal strips (13, 14) are pressed together from opposite sides, from the flat sides, with a high pressure while clamping the plastic net structure in such a way that the metal of the metal strips (13, 14) flows into the plastic net structure (12) and the two metal strips (13, 14) are connected together at least at the edges of the plastic net structure (12).

2. Method in accordance with claim 1, characterized in that the electrically well conducting metallisation consists of copper.

3. Method in accordance with claim 1 or claim 2, characterized in that the two metal strips (13, 14) are pressed together from the flat sides with a high pressure from opposite sides while clamping the plastic net structure and while being heated to a temperature which at least softens the metal strips (13, 14) but does not yet allow the plastic net structure (12) to be melted or decomposed.

4. Method in accordance with claim 3, characterized in that the heating takes place to a temperature which at least melts the surface of the metal strips (13, 14) at the edges.

5. Method in accordance with one of the preceding claims, characterized in that the two metal strips (13, 14) also bond together in the interior of the plastic net structure (12).

6. Method in accordance with one of the preceding claims, characterized in that the metal strips (13, 14) consist of tin or of a lead/tin alloy.

7. Method in accordance with claim 1, characterized in that the lead/tin alloy has a lead component of up to 50 %.

8. Method in accordance with claim 1, characterized in that the metal strips (13, 14) project at the free edges of the current conducting lug (11) beyond the plastic net structure (12), and
- are either cut after pressing approximately to the size of the current conducting lug (11), in particular by a stamping process,
- or are folded as a unit around one edge of the current conducting lug (11) and are then pressed and are cut to size at the free edges in so far as this is still necessary.

9. Method in accordance with claim 8, characterized in that the metal strips are folded as a unit around the upper edge of the current conducting lug (11) and are then pressed and cut to size at the free edges, in so far as this is still necessary.

10. Method in accordance with claim 8 or claim 9, characterized in that the cutting to size at the free edges takes place through a stamping process.

11. Method in accordance with one of the claims 1 to 3, characterized in that the pressing process is carried out continuously between two rolls (15, 16), of which at least one is heated, and to which two metal strips (13, 14), and between them the plastic net structure in the region of the current conducting lug to be formed, are supplied and continuously passed through.

12. Method in accordance with claim 11, characterized in that both rolls (15, 16) are heated.

13. Method in accordance with one of the preceding claims, characterized in that the pressing process is carried out at a temperature between 100 and 120°C and/or in that the pressure during the pressing process is greater than 20 bar.

14. Method in accordance with claim 13, characterized in that the pressure during the pressing process amounts to 25 to 35 bar.

15. Method in accordance with claim 14, characterized in that the pressure during the pressing process amounts to approximately 30 bar.

16. Method in accordance with one of the preceding claims, characterized in that two further metal strips (24, 25) with a substantially higher melting point are applied to the so manufactured current conducting lug (11) from both flat sides and are connected to the underlying metal strips (13, 14) by the supply of heat and surface melting of the underlying metal strips (13, 14) of the alloy which melts at lower temperature and by pressing them together with the latter.

17. Method in accordance with claim 16, characterized in that the further metal strips (24, 25) consist of lead or a lead alloy.

18. Method in accordance with claim 17, characterized in that the lead alloy contains up to 3 % of tin.

19. Method in accordance with one of the claims 16, to 18, characterized in that the further metal strips (24, 25) are soldered or welded at the edges, after application onto the plastic net structure (12).

20. Method in accordance with one of the preceding claims, characterized in that the current conducting lugs (11) are formed on a continuously advanced band (18) of joined together plates of a plastic net structure and the stamping away of superfluous regions of the metal strips (13, 14) takes place together with the cutting of the band (18) into individual electrode plates (26).

21. Method in accordance with one of the preceding claims, characterized in that the applied metal strips (13, 14; 24, 25) are additionally locally heated until they fuse together after or during the pressing, with the heated regions being so restricted that after the fusing together the heat which arises is adequately quickly distributed to the remaining regions of the metal strips in order to avoid a melting or decomposition of the plastic, with the local heating preferably taking place by ultrasonics, electrical induction, eddy-currents or microwaves and/or with the local heating taking place along the edge of the metal strips (13, 14; 24, 25) and/or at the foot of the current conducting lug (11).

22. Method of forming metallic current conducting lugs (11) on an electrode plate, wherein at least the region where the current conducting lug (11) has to be formed consists of a plastic net structure which is provided with a metallisation which is in turn provided with a tin or lead/tin coating and/or a lead coating or a lead alloy coating, characterized in that the plastic net structure (12) is copper metallised once or multiply to form a thick metal layer and is subsequently tinned and leaded.

23. Method of forming metallic current conducting lugs (11) on an electrode plate, wherein at least the region where the current conducting lug has to be formed consists of a plastic net structure, which is provided with a metallisation, in accordance with one of the preceding claims, characterized in that the plastic net structure (12) is metallised once or multiply to form a thick metal layer and is subsequently tinned and leaded.

24. Method in accordance with claim 22 or claim 23, characterized in that the metallisation consists of copper.

25. Method in accordance with one of the claims 22 to 23, characterized in that, in addition to the current conducting lug (11) itself, a region around the opening of the current conducting lug (11) into the plate part is more thickly or multiply copper coated and subsequently tinned or leaded.

26. Method in accordance with one of the preceding claims, characterized in that the plastic net structure (12) is also made of narrower mesh in the region where the current conducting lug (11) opens into the plate part than in the remaining regions of the electrode plates.

27. Method in accordance with claim 26, characterized in that the plastic net structure (12) is also made of narrower mesh in the region around the entry of the current conducting lug (12) into the plate part than in the remaining regions of the electrode plates.

28. Method in accordance with claim 26 or claim 27, characterized in that the mesh size in the region of the current conducting lugs (11) amounts to 0.5 to 10 mm² and amounts to 5 to 50 mm² in the remaining regions of the electrode plates.

29. Method in accordance with one of the preceding claims, characterized in that a current conducting bridge (28) is only cast around the upper region of the current conducting lug (11).

30. Method in accordance with claim 29, characterized in that the current conducting bridge (28) consists of lead or lead alloy.

31. Method in accordance with one of the preceding claims, characterized in that in each case two electrode plates (26) lying alongside one another, with current conducting lugs (11) lying on the same inner side, are cut out or stamped out of a single broad band (28).

32. Method in accordance with one of the preceding claims, characterized in that prior to the application of the metal strips (13, 14), the open meshes of the already metallised plastic net structure, which is also provided with a tin or lead/tin and/or lead or lead alloy coating, are filled out by a dipping process in a bath of tin or of lead tin.

33. Accumulator electrode plate (26), in which at least the region where the current conducting lug (11) is formed consists of a plastic net structure which is provided with a conductive metallisation manufactured in accordance with the method in accordance with one of the preceding claims, characterized in that additional metal layers of tin, lead/tin alloys, lead and/or copper are so carefully applied in the region of the current conducting lug (11) that the plastic net structure is not impaired.

34. Accumulator electrode plate (26) in accordance with claim 33, characterized in that the metallisation consists of copper.

## Revendications

1. Procédé de réalisation de cosses métalliques (11) collectrices de courant sur une plaque d'électrode d'accumulateur, dans laquelle au moins la zone où doit être réalisée la cosse (11) collectrice de courant est constituée d'un treillis en matière de synthèse qui est muni d'une métallisation bonne conductrice de l'électricité, qui à son tour est munie d'un revêtement d'étain, ou de plomb-étain et/ou de plomb ou d'alliage de plomb,
caractérisé en ce que
sur les deux surfaces opposées du treillis (12) en matière de synthèse, dans la zone de la cosse (11) collectrice de courant, sont disposées des bandes métalliques (13, 14) d'un alliage fondant à basse température, qui recouvrent au moins la zone supérieure de la cosse (11) collectrice de courant qu'il s'agit de réaliser, et en ce que les deux bandes métalliques (13, 14) sont pressées l'une contre l'autre à partir de côtés opposés, sous pression élevée, en pinçant le treillis (12) en matière de synthèse à partir des côtés plats, de façon telle que le métal des bandes métalliques (13, 14) flue en pénétrant dans le treillis (12) en matière de synthèse et que les deux bandes métalliques (13, 14) se trouvent reliées entre elles au moins sur les bords du treillis (12) en matière de synthèse.

2. Procédé selon la revendication 1,
caractérisé en ce que
la métallisation bonne conductrice de l'électricité est constituée de cuivre.

3. Procédé selon la revendication 1 ou 2,
caractérisé en ce que
les deux bandes métalliques (13, 14) sont pressées l'une contre l'autre à partir de côtés opposés, sous pression élevée, en pinçant le treillis (12) en matière de synthèse à partir des côtés plats, en étant échauffées jusqu'à une température qui, au minimum, provoque le ramollissement des bandes métalliques (13, 14) mais ne fait pas encore fondre le treillis (12) en matière de synthèse, ni ne décompose la matière de synthèse.

4. Procédé selon la revendication 3,
caractérisé en ce que
l'échauffement est effectué jusqu'à une température qui fait débuter la fusion des bandes métalliques (13, 14) au moins sur les bords.

5. Procédé selon l'une des revendications précédentes,
caractérisé en ce que
les deux bandes métalliques (13, 14) se trouvent reliées entre elles également dans l'intérieur du treillis (12) en matière de synthèse.

6. Procédé selon l'une des revendications précédentes,
caractérisé en ce que
les bandes métalliques (13, 14) sont constituées d'étain, ou d'un alliage plomb-étain.

7. Procédé selon la revendication 6,
caractérisé en ce que
l'alliage plomb-étain a une teneur en plomb allant jusqu'à 50 %.

8. Procédé selon la revendication 1,
caractérisé en ce que
les bandes métalliques (13, 14) dépassent sur les bords libres de la cosse (11) collectrice de courant au-delà du treillis (12) en matière de synthèse, et sont
- soit coupées après l'opération de compression, en particulier par une opération de découpe approximativement à la dimension de la cosse (11) collectrice de courant,
- soit repliées sous forme d'ensemble unitaire autour d'un bord de la cosse (11) collectrice de courant, puis soumises à une opération de compression et coupées sur les bords libres, dans la mesure où cela est encore nécessaire.

9. Procédé selon la revendication 8,
caractérisé en ce que
les bandes métalliques (13, 14) sont repliées sous forme d'ensemble unitaire autour du bord supérieur de la cosse (11) collectrice de courant, puis comprimées et coupées sur les bords libres dans la mesure où cela est encore nécessaire.

10. Procédé selon la revendication 8 ou 9,
caractérisé en ce que
la coupe sur les bords libres est effectuée au moyen d'une opération de découpe.

11. Procédé selon l'une des revendications précédentes,
caractérisé en ce que
l'opération de compression est exécutée en continu entre deux rouleaux (15, 16) dont au moins un est chauffé et auxquels sont amenées, dans la zone des cosses (11) collectrices de courant qu'il s'agit de réaliser, deux bandes métalliques (13, 14), avec entre elles le treillis en matière de synthèse.

12. Procédé selon la revendication 11,
caractérisé en ce que
les deux rouleaux (15, 16) sont chauffés.

13. Procédé selon l'une des revendications précédentes,
caractérisé en ce que
l'opération de compression est exécutée à une température comprise entre 100 et 120°C et/ou la pression, lors de l'opération de compression, est supérieure à 20 bars.

14. Procédé selon la revendication 13,
caractérisé en ce que
la pression, lors de l'opération de compression, est d'environ 25 à 35 bars.

15. Procédé selon la revendication 14,
caractérisé en ce que
la pression, lors de l'opération de compression, est d'environ 30 bars.

16. Procédé selon l'une des revendications précédentes,
caractérisé en ce que
sur la cosse (11) collectrice de courant ainsi réalisée, deux autres bandes métalliques (24, 25) à point de fusion nettement plus élevé sont mises en place à partir des deux côtés plats, lesquelles bandes métalliques (24, 25) sont reliées à cette dernière par apport de chaleur et fusion des bandes métalliques (13, 14) constituées d'un alliage fondant à basse température qui se trouvent sous elles, ainsi que par application de pression.

17. Procédé selon la revendication 16,
caractérisé en ce que
les autres bandes métalliques (24, 25) sont constituées de plomb, ou d'un alliage de plomb.

18. Procédé selon la revendication 17,
caractérisé en ce que
l'alliage de plomb contient jusqu'à 3 % d'étain.

19. Procédé selon l'une des revendications 16 à 18,
caractérisé en ce que
les autres bandes métalliques (24, 25) sont encore brasées ou soudées sur les bords après avoir été placées sur le treillis (12) en matière de synthèse.

20. Procédé selon l'une des revendications précédentes,
caractérisé en ce que
les cosses (11) collectrices de courant sont réalisées sur une bande (18) déplacée vers l'avant en continu, constituée de plaques de treillis en matière de synthèse contiguës et en ce que l'élimination par découpe de zones superflues des bandes métalliques (13, 14) s'effectue en même temps que le découpage de la bande (18) en plaques d'électrodes individuelles.

21. Procédé selon l'une des revendications précédentes,
caractérisé en ce que
les bandes métalliques (13, 14 ; 24, 25) mises en place sont, après la compression, ou lors de celle-ci, en outre, chauffées localement jusqu'à ce qu'elles s'assemblent par fusion, les zones de chauffage étant délimitées de façon telle qu'après l'assemblage par fusion la chaleur qui se dégage se répartisse suffisamment vite sur les autres zones des bandes métalliques pour éviter une fusion ou une décomposition de la matière de synthèse, l'échauffement local étant effectué de préférence par ultrasons, par induction électrique, par courants de Foucault ou par micro-ondes, et/ou l'échauffement local étant effectué le long du bord des bandes métalliques (13, 14 ; 24, 25) et/ou au pied de la cosse (11) collectrice de courant.

22. Procédé de réalisation de cosses métalliques (11) collectrices de courant sur une plaque d'électrode dans laquelle au moins la zone où doit être réalisée la cosse collectrice de courant est constituée d'un treillis en matière de synthèse qui est muni d'une métallisation conductrice, laquelle, à son tour, est munie d'un revêtement d'étain ou de plomb-étain et/ou de plomb ou d'un alliage de plomb,
caractérisé en ce que
le treillis (12) en matière de synthèse est, en vue de la formation d'une couche métallique épaisse, métallisé une fois ou plusieurs fois, puis étamé et recouvert de plomb.

23. Procédé de réalisation de cosses métalliques (11) collectrices de courant sur une plaque d'électrode dans laquelle au moins la zone où doit être réalisée la cosse collectrice de courant est constituée d'un treillis en matière de synthèse qui est muni d'une métallisation conductrice, selon l'une des revendications précédentes,
caractérisé en ce que
le treillis (12) en matière de synthèse est, en vue de la formation d'une couche métallique épaisse, métallisé une fois ou plusieurs fois, puis étamé et recouvert de plomb.

24. Procédé selon la revendication 22 ou 23,
caractérisé en ce que
la métallisation est constituée de cuivre.

25. Procédé selon l'une des revendications 22 à 23,
caractérisé en ce que
en plus de la cosse (11) collectrice de courant elle-même, une zone entourant le débouché de la cosse (11) collectrice de courant dans la pièce formant plaque est également revêtue d'une couche de cuivre plus épaisse, ou de plusieurs couches de cuivre, puis étamée ou revêtue de plomb.

26. Procédé selon l'une des revendications précédentes,
caractérisé en ce que
le treillis (12) en matière de synthèse comporte des mailles plus serrées dans la zone des cosses (11) collectrices de courant que dans les autres zones de la plaque d'électrode.

27. Procédé selon la revendication 26,
caractérisé en ce que
le treillis (12) en matière de synthèse comporte également des mailles plus serrées dans la zone entourant le débouché de la cosse (11) collectrice de courant dans la pièce formant plaque, que dans les autres zones des plaques d'électrodes.

28. Procédé selon la revendication 26 ou 27,
caractérisé en ce que
la dimension des mailles dans la zone des cosses (11) collectrices de courant est de 0,5 à 10 mm², et dans les autres zones des plaques d'électrodes de 5 à 50 mm².

29. Procédé selon l'une des revendications précédentes,
caractérisé en ce que
un pont (28) conducteur de courant n'est coulé qu'autour de la zone supérieure de la cosse (11) collectrice de courant.

30. Procédé selon la revendication 29,
caractérisé en ce que
le pont (28) conducteur de courant est constitué de plomb, ou d'un alliage de plomb.

31. Procédé selon l'une des revendications précédentes,
caractérisé en ce que
à partir d'une bande large unique (28) chaque fois deux plaques d'électrodes (26) l'une à côté de l'autre comportant des cosses (11) collectrices de courant situées du même côté intérieur sont coupées ou découpées.

32. Procédé selon l'une des revendications précédentes,
caractérisé en ce que
avant l'application des bandes métalliques (13, 14), les mailles ouvertes du treillis en matière de synthèse déjà métallisé et également muni d'un revêtement d'étain ou de plomb-étain et/ou de plomb ou d'un alliage de plomb sont complètement remplies de métal grâce à un processus de plongée dans un bain d'étain, ou de plomb-étain.

33. Plaque (26) d'électrode d'accumulateur, dans laquelle au moins la zone où est réalisée la cosse (11) collectrice de courant est constituée d'un treillis en matière de synthèse qui est muni d'une métallisation conductrice, fabriquée selon l'une des revendications précédentes,
caractérisée en ce que
dans la zone de la cosse (11) collectrice de courant des couches métalliques d'étain, d'alliages plomb-étain, de plomb et/ou de cuivre sont appliquées en plus, de façon tellement soigneuse que le treillis en matière de synthèse ne subit pas d'atteinte néfaste.

34. Plaque (36) d'électrode d'accumulateur selon la revendication 33,
caractérisée en ce que
la métallisation est constituée de cuivre.
